# DEMANDE DE BREVET EUROPEEN

(11) **EP 1 721 778 A2**
(43) Date de publication de la demande: **15.11.2006**
(21) Numéro de dépôt: 06300449.3
(22) Date de dépôt: 10.05.2006
(51) Int. Cl.: B60N 2/30, B60N 2/015

(54) **Assise de siège de véhicule automobile articulée sur un support fixe et désolidarisable de celui-ci**

(30) Priorité: 13.05.2005 FR 0504838
(71) Demandeur: PEUGEOT CITROËN AUTOMOBILES S.A., 78140 Velizy Villacoublay (FR)
(72) Inventeur: Gremillet, Eric, 70200, La Vergenne (FR)
(74) Mandataire: Couillard, Yann Luc Raymond

(57) **Abrégé**

La présente invention concerne une assise de siège de véhicule automobile articulée sur un support fixe et désolidarisable de celui-ci.

L'assise est caractérisée en ce que le support fixe (5) comprend une pièce en forme de chape à laquelle l'axe d'articulation (4) est amoviblement fixé à ses deux parois latérales (7,8) par un moyen de verrouillage (11) déverrouillable manuellement pour libérer l'axe d'articulation (4) de la pièce en forme de chape (5).

L'invention trouve application dans le domaine de l'automobile.

## Description

La présente invention concerne une assise de siège de véhicule automobile articulée sur un support fixe et pouvant être désolidarisée de ce support.

Elle s'applique en particulier à une assise de siège arrière d'un véhicule automobile.

On connaît des assises de sièges arrière de véhicules automobiles pouvant être démontées de leurs structures de support, telles que les planchers des véhicules, mais un tel démontage nécessite un outillage particulier.

La présente invention propose une solution permettant de réaliser une assise notamment arrière de véhicule automobile articulée sur une structure de support et pouvant être montée ou démontée de cette structure sans aucun outil.

A cet effet, selon l'invention, l'assise de siège notamment arrière de véhicule automobile montée articulée autour d'au moins un axe transversal, solidaire de l'armature de l'assise, sur un support fixe lié au plancher du véhicule, et pouvant être désolidarisée du support fixe, est caractérisée en ce que le support fixe comprend une pièce en forme de chape à laquelle l'axe d'articulation est amoviblement fixé transversalement à ses deux parois latérales par un moyen de verrouillage déverrouillable manuellement pour libérer l'axe d'articulation de la pièce en forme de chape.

L'axe transversal d'articulation est logé au fond de chacune de deux découpes réalisées respectivement dans les deux parois latérales de la pièce en forme de chape et qui sont ouvertes à l'opposé de leurs fonds respectifs pour permettre l'introduction de l'axe d'articulation dans ces découpes.

Le moyen de verrouillage comprend avantageusement une plaque maintenue en appui sous l'action de la force de rappel d'au moins un organe élastique contre la face externe de l'une des parois latérales de la pièce en forme de chape et comportant un perçage dans lequel est engagée l'extrémité libre de l'axe d'articulation.

La plaque de verrouillage comprend en outre une patte formant rampe inclinée vers le haut à l'opposé de la face de la paroi latérale sur laquelle est en appui la plaque de verrouillage en étant disposée sensiblement en regard de la découpe correspondante et permettant d'une part, lors de l'introduction de l'axe d'articulation dans les découpes des parois latérales de la pièce en forme de chape, d'écarter élastiquement la plaque de verrouillage de sa face d'appui par l'extrémité libre de l'axe d'articulation descendant le long de la plaque formant rampe jusqu'à ce que cet axe occupe sa position d'engagement aux fonds des découpes et à laquelle l'extrêmité libre de l'axe s'engage automatiquement dans le perçage de la plaque de verrouillage par rappel de cette dernière sur sa face d'appui par l'organe élastique, et d'autre part, d'être manuellement saisie pour écarter la plaque de verrouillage de sa face d'appui pour libérer l'extrêmité libre de l'axe d'articulation du perçage de cette plaque.

L'axe d'articulation comprend un moyen le positionnant transversalement relativement aux parois latérales de la pièce en forme de chape lors de son introduction dans les découpes de ces parois pour lui permettre d'être automatiquement bloqué aux fonds de la découpe par le moyen de verrouillage.

Le moyen de positionnement comprend deux rondelles solidaires de l'axe d'articulation à l'opposé de son extrêmité libre et espacées l'une de l'autre le long de cet axe d'une distance légèrement supérieure à l'épaisseur de la paroi latérale de la pièce en forme de chape opposée à la paroi associée au moyen de verrouillage, chaque rondelle ayant un diamètre supérieur à la largeur de la partie de la découpe correspondante définissant le fond arqué de support de l'axe d'articulation.

L'organe élastique de rappel de la plaque de verrouillage comprend un ressort hélicoïdal de compression disposé dans la pièce en forme de chape coaxialement sur une tige solidaire de la plaque de verrouillage et traversant à coulissement la paroi correspondante, le ressort étant précontraint entre la face interne de cette paroi et une butée solidaire de l'extrêmité de la tige.

De préférence, la tige est coudée en forme de U de manière que la partie coudée du U soit solidaire de la plaque de verrouillage en faisant saillie extérieurement de celle-ci et les tiges parallèles du U traversent à coulissement respectivement deux perçages de la paroi correspondante et portent deux ressorts hélicoïdaux de compression montés précontraints entre la face interne de cette paroi et deux butées solidaires respectivement des extrémités des deux tiges.

L'invention vise également un procédé de montage d'une assise de siège de véhicule automobile à une structure fixe, liée au plancher du véhicule par l'intermédiaire de ses deux axes transversaux d'articulation solidaires de l'armature de l'assise et destinés à être solidarisés amoviblement respectivement à deux pièces en forme de chape de la structure fixe pourvues chacune d'un moyen de verrouillage conformément à la description qui précède, et qui est caractérisé en ce qu'il consiste à positionner les axes d'articulation, par l'intermédiaire de leurs moyens de positionnement respectifs, relativement aux parois latérales des pièces en forme de chape, et à pousser vers le bas les axes d'articulation pour les engager dans la découpe des parois latérales et écarter élastiquement les plaques de verrouillage de leurs parois latérales associées par la force de répulsion exercée par les extrémités libres des axes d'articulation sur les pattes formant rampe des plaques de verrouillage, jusqu'à ce que les axes d'articulation occupent leur position aux fonds des découpes à laquelle l'extrêmité libre de chaque axe d'articulation est automatiquement engagée dans le perçage de la plaque de verrouillage associée.

L'invention sera mieux comprise, et d'autres buts, caractéristiques, détails et avantages de celle-ci apparaîtront plus clairement dans la description explicative qui va suivre faite en référence aux dessins annexés donnés uniquement à titre d'exemple illustrant un mode de réalisation de l'invention et dans lesquels:
- la figure 1 est une vue en perspective d'un siège arrière de véhicule automobile conforme à l'invention;
- la figure 2 est une vue en perspective agrandie de la partie cerclée en II de la figure 1 d'une articulation démontable de l'assise;
- la figure 3 est une vue suivant l'angle d'incidence de la flèche III de l'articulation démontable de la figure 2; et
- les figures 4 et 5 sont des vues en perspective représentant les étapes de montage de l'articulation de l'assise de l'invention à sa position d'utilisation de la figure 2.

L'invention va être décrite dans l'application à une assise de siège arrière d'un véhicule automobile, mais il est bien entendu qu'elle peut également s'appliquer à tout autre type d'assise de véhicule.

En outre, l'assise de siège arrière qui va être décrite est du type pouvant recevoir deux personnes, mais il est bien entendu qu'elle peut être du type ne recevant qu'une personne ou pouvant recevoir trois personnes en formant une banquette.

En se reportant aux figures, la référence 1 désigne un siège arrière de véhicule automobile à dossier 2 pouvant être rabattu et assise 3 montée pivotante autour de deux axes transversaux 4 solidaires de l'armature, non représentée, de l'assise 3, sur un support fixe 5 solidaire d'une structure 6 du véhicule en avant de l'assise, de manière à permettre le soulèvement de l'assise et son basculement vers l'avant dans le but de libérer une surface de plancher du véhicule pour augmenter le volume du rangement du coffre arrière en rabattant le dossier articulé à l'assise contre cette dernière.

La structure 6 est solidaire du plancher du véhicule.

Selon l'invention, l'assise 3 peut être désolidarisée sans outil des deux supports fixes 5 transversalement espacés l'un de l'autre.

A cet effet, chaque support fixe 5 comprend une pièce en forme de chape dont les parois latérales 7,8 s'étendent parallèlement à la direction longitudinale du véhicule et le paroi plane 9 de liaison des parois latérales 7,8 est solidaire de la structure 6 par vissage ou soudage. Chaque axe transversal d'articulation 4, qui est fixé à l'armature de l'assise 3 par l'intermédiaire d'un axe de liaison 10 s'étendant sensiblement à angle droit de l'axe 4, est amoviblement fixé aux deux parois latérales 7,8 de la pièce en forme de chape correspondante 5 par un moyen de verrouillage 11 situé d'un côté externe de l'une des parois 7,8 et qui est déverrouillable manuellement pour libérer l'axe d'articulation 4 de la pièce en forme de chappe 5 comme on le verra ultérieurement.

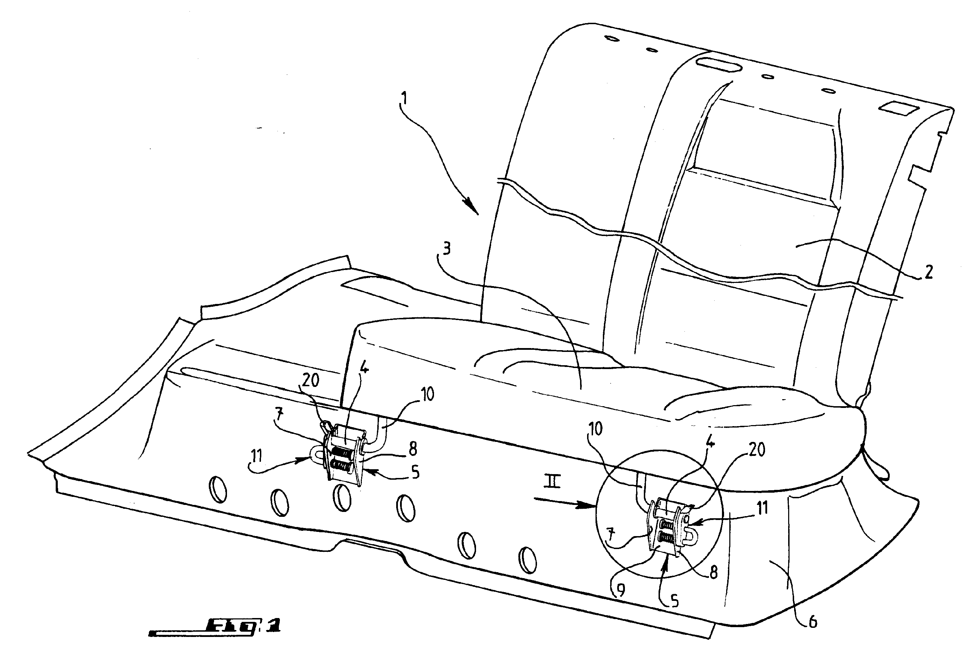

Ainsi, les deux moyens de verrouillage 11 sont situés aux côtés externes des plaques latérales 7, 8 des deux pièces 5 les plus éloignées transversalement l'une de l'autre comme représenté en figure 1 qui montre également que les deux axes d'articulation 4 s'étendent en direction transversale en sens opposés l'un de l'autre.

Les deux parois latérales 7, 8 de chaque pièce en forme de chape 5 comportent en leurs parties supérieures respectivement deux découpes 12 chacune définie par deux bords parallèles 12a raccordés par un fond arrondi 12b et deux bords d'ouverture supérieurs évasés 12c destinés à faciliter l'introduction de l'axe 4 au fond 12b de chaque découpe 12 lors du montage de cet axe à la pièce en forme de chape 5.

Chaque axe d'articulation 4 comporte à l'opposé de son extrémité libre deux rondelles 13 axialement espacées le long de cet axe d'une distance légèrement supérieure à l'épaisseur de la paroi latérale 7 de la pièce 5 et constituant un moyen de positionnement de l'axe 4 relativement aux parois 7, 8 lors de son introduction dans les deux découpes 12 de ces parois. Le diamètre de chacune des rondelles 13 est supérieur à la largeur de la découpe correspondante 12 au niveau de ses bords parallèles 12a de manière à maintenir l'axe d'articulation 4 transversalement aux parois latérales 7,8 de la pièce 5 une fois verrouillé à cette dernière, les deux rondelles 13 étant en appui à faible jeu de chaque côté de la paroi 7.

Le moyen de verrouillage 11 de chaque axe d'articulation 4 à sa pièce formant chape 5 comprend une plaque 14 maintenue en appui sur la face externe de la paroi latérale 8 opposée à la paroi 7 associée aux rondelles 13 par la force de rappel de deux organes élastiques 15 constitués par deux ressorts hélicoïdaux de compression montés coaxialement respectivement sur deux tiges parallèles 16 transversant à coulissement deux perçages 8a de la paroi latérale 8 et s'étendant entre les deux parois latérales 7,8 de la pièce 5. Chaque ressort 15 est monté précontraint entre la face interne de la paroi 8 opposée à celle sur laquelle est en appui la plaque de verrouillage 14 et une butée 17 solidaire de l'extrémité de la tige correspondante 16 pour maintenir élastiquement la plaque du verrouillage 14 sur sa face correspondante de la paroi 8. Les deux tiges parallèles 16 traversent également la paroi de verrouillage 14 en étant solidaire de celle-ci et sont reliées l'une à l'autre par une partie coudée 18 faisant saillie de la paroi 14 perpendiculairement à celle-ci et constituant un moyen de préhension permettant d'écarter manuellement la plaque de verrouillage 14 de la paroi 8.

Comme représenté, la partie en forme de U constituée par les deux tiges 16 et la branche de liaison 18 est disposée dans un plan sensiblement parallèle à la paroi 9 de la pièce en forme de chape 5. Selon une variante de réalisation, le moyen de rappel de la plaque de verrouillage 14 en appui sur la paroi latérale 8 peut être constitué par un seul ressort monté précontraint sur une seule tige 16 traversant à coulissement un perçage 8a ainsi que la plaque 14 en étant solidaire de cette dernière et se terminant par une partie externe pouvant être saisie manuellement pour écarter élastiquement la plaque 14 de la paroi 8 à l'encontre de la force de rappel du ressort 15.

Chaque plaque de verrouillage 14 comprend un perçage 19 dans lequel est engagée l'extrémité libre de l'axe d'articulation correspondant 4 de manière à immobiliser ce dernier à la pièce formant chape 5 pour assurer la fonction de basculement de l'assise 3.

La plaque de verrouillage 14 comprend enfin une patte 20 formant une rampe inclinée vers le haut à l'opposé de la paroi latérale 8 en étant disposée sensiblement en regard de la découpe 12 de la paroi 8 avec son extrémité libre supérieure située à un niveau supérieur à celui des deux bords évasés 12c de la découpe 12. La patte 20 présente une forme de goulotte 21 dirigée vers la découpe 12 et dans laquelle peut s'engager à coulissement l'extrémité libre de l'axe d'articulation 4.

La solidarisation de chaque axe d'articulation 4 à sa pièce formant chape correspondante 5 ressort déjà de la description qui précède et va être maintenant expliquée.

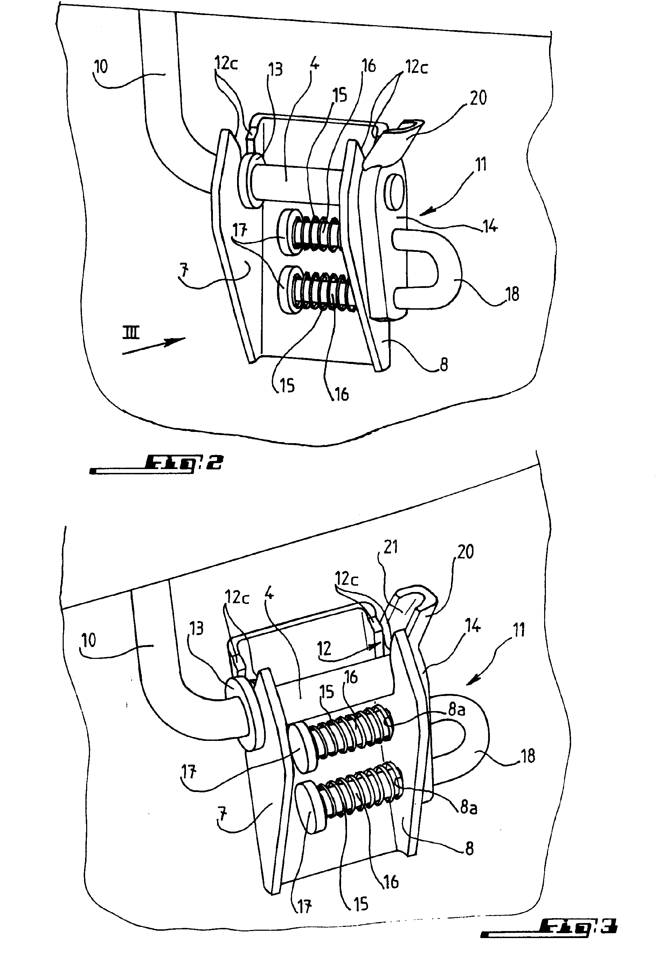

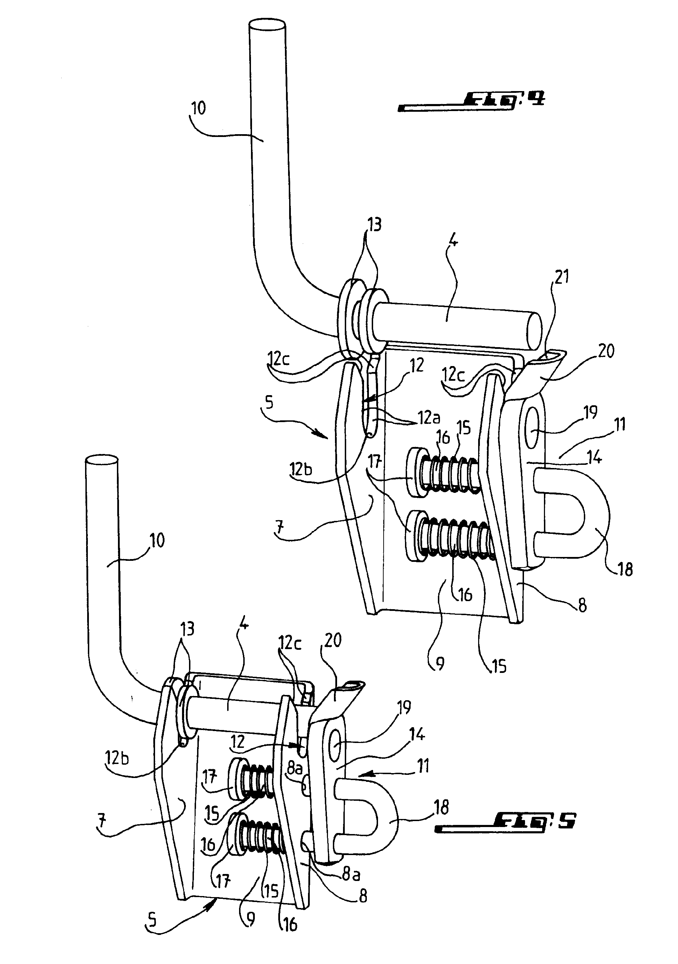

L'assise 3 est tout d'abord présentée relativement à la structure 6 de manière que les deux axes d'articulation 4 soient en aplomb des découpes 12 avec les deux rondelles 13 de chaque axe 4 situées également en aplomb de la découpe correspondante 12 de la paroi latérale 7 de manière que la portion de l'axe 4 comprise entre les deux rondelles 13 puisse s'engager dans la découpe 12. La figure 4 représente la position de l'axe 4 lui permettant d'être introduit dans les découpes 12 des parois latérales 7 et 8 de la pièce formant chape correspondante 5. A partir de cette position, l'assise est poussée vers le bas de manière à introduire la portion d'axe 4 entre les deux rondelles 13 dans sa découpe pour bloquer l'axe 4 en direction transversale à la paroi latérale 7 et à engager l'extrémité libre de l'axe 4 dans la goulotte inclinée 21 formant rampe de la patte 20 pour provoquer l'écartement de la plaque de verrouillage 14 relativement à la paroi latérale 8 à l'encontre de la force de rappel des ressorts 15 comme représenté en figure 5. Ainsi, l'engagement de l'axe d'articulation 4 dans les découpes 12 est guidé d'une part par les deux rondelles 13 situées de part et d'autre de la paroi latérale 7 et d'autre part par l'extrémité libre de l'axe 4 descendant dans la goulotte inclinée 21.

Sous la pression descendante exercée sur chaque axe d'articulation 4, ce dernier arrive à sa position d'appui aux fonds 12b des découpes 12 à laquelle l'extrêmité libre de l'axe 14 se trouve en face du perçage 19 de la plaque du verrouillage 14 qui est rappelée automatiquement à sa position d'appui sur la paroi 8 par la force de rappel des ressorts 15 de manière à engager l'extrémité libre de l'axe 4 dans le perçage 19 et verrouiller l'axe 4 aux parois latérales 7, 8 de la pièce formant chape 5 comme représenté aux figures 2 et 3.

De la sorte, l'assise 3 est montée articulée aux pièces formant chape 5 par intermédiaire de ses deux axes 4 pour lui permettre de basculer vers l'avant du véhicule.

Le démontage de chaque axe d'articulation 4 de sa pièce formant chape correspondante 5 s'effectue tout simplement en saisissant manuellement la partie coudée 18 pour exercer sur les tiges 16 une traction comprimant les ressorts 15 et écarter la plaque de verrouillage 14 de la paroi latérale 8 à une position à laquelle l'extrémité libre de l'axe d'articulation 4 est complètement désengagée du perçage 19 de cette plaque et l'utilisateur peut alors tirer vers le haut l'assise 3 pour désengager les deux axes d'articulation 4 de leurs découpes respectives 12.

L'invention permet ainsi le montage et le démontage rapides sans outil de l'assise arrière d'un véhicule automobile tout en conservant en position montée sa cinématique de basculement permettant de libérer une surface du plancher du véhicule utilisable pour un rangement d'objets. En outre, la structure des moyens de solidarisation de chaque axe d'articulation 4 est non seulement simple d'utilisation mais également suffisamment robuste pour résister aux diverses contraintes d'utilisation de l'assise du siège arrière.

## Revendications

1. Assise de siège, notamment arrière, de véhicule automobile montée articulée autour d'au moins un axe transversal (4), solidaire de l'armature de l'assise (3), sur un support fixe (5) lié au plancher du véhicule, et pouvant être désolidarisée du support fixe (5), **caractérisée en ce que** le support fixe comprend une pièce en forme de chape (5) à laquelle l'axe d'articulation (4) est amoviblement fixé transversalement à ses deux parois latérales (7, 8) par un moyen de verrouillage (11) déverrouillable manuellement pour libérer l'axe d'articulation (4) de la pièce en forme de chape (5).

2. Assise selon la revendication 1, **caractérisée en ce que** l'axe transversal d'articulation (4) est logé au fond (12b) de chacune de deux découpes (12) réalisées respectivement dans les deux parois latérales (7,8) de la pièce en forme de chape (5) et qui sont ouvertes à l'opposé de leurs fonds respectifs (12b) pour permettre l'introduction de l'axe d'articulation (4) dans ces découpes.

3. Assise selon la revendication 2, **caractérisée en ce que** le moyen de verrouillage (11) comprend une plaque (14) maintenue en appui sous l'action de la force de rappel d'au moins un organe élastique (15) contre la face externe de l'une (8) des parois latérales (7,8) de la pièce en forme de chape (5) et comportant un perçage (19) dans lequel est engagée l'extrémité libre de l'axe d'articulation (4).

4. Assise selon la revendication 3, **caractérisée en ce que** la plaque de verrouillage (14) comprend une patte (20) formant rampe inclinée vers le haut à l'opposé de la face de la paroi latérale (8) sur laquelle est en appui la plaque de verrouillage (14) en étant disposée sensiblement en regard de la découpe correspondante (12) et permettant d'une part, lors de l'introduction de l'axe d'articulation (4) dans les découpes (12) des parois latérales (7, 8) de la pièce en forme de chape (5), d'écarter élastiquement la plaque de verrouillage (14) de sa face d'appui par l'extrémité libre de l'axe d'articulation descendant le long de la patte formant rampe (20) jusqu'à ce que cet axe occupe sa position d'engagement aux fonds (12b) des découpes (12) et à laquelle l'extrémité libre de l'axe (4) s'engage automatiquement dans le perçage (19) de la plaque de verrouillage (14) par rappel de cette dernière sur sa face d'appui par l'organe élastique (15), et d'autre part d'être manuellement saisie pour écarter la plaque de verrouillage (14) de sa face d'appui pour libérer l'extrémité libre de l'axe (14) du perçage (19) de cette plaque.

5. Assise selon l'une des revendications 2 à 4, **caractérisée en ce que** l'axe d'articulation (4) comprend un moyen (13) le positionnant transversalement relativement aux parois latérales (7,8) de la pièce en forme de chape (5) lors de son introduction dans les découpes (12) de ces parois pour lui permettre d'être automatiquement bloqué aux fonds (12b) des découpes (12) par le moyen de verrouillage (11).

6. Assise selon la revendication 5, **caractérisée en ce que** le moyen de positionnement comprend deux rondelles (13) solidaires de l'axe d'articulation (4) à l'opposé de son extrémité libre et espacées l'une de l'autre le long de cet axe d'une distance légèrement supérieure à l'épaisseur de la paroi latérale (7) de la pièce en forme de chape (5) opposée à la paroi (8) associée au moyen de verrouillage (11), chaque rondelle (13) ayant un diamètre supérieur à la largeur de la partie de la découpe correspondante (12) définissant le fond arqué (12b) de support de l'axe d'articulation (4).

7. Assise selon l'une des revendications 3 à 6, **caractérisée en ce que** l'organe élastique (15) de rappel de la plaque de verrouillage (14) comprend un ressort hélicoïdal de compression disposé dans la pièce en forme de chape (5) coaxialement sur une tige (16) solidaire de la plaque de verrouillage (14) et traversant à coulissement la paroi correspondante (8), le ressort (15) étant précontraint entre la face interne de cette paroi et une butée (17) solidaire de l'extrémité de la tige (16).

8. Assise selon la revendication 7, **caractérisée en ce que** la tige (16) est coudée en forme de U de manière que la partie coudée (18) du U soit solidaire de la plaque de verrouillage (14) en faisant saillie extérieurement de celle-ci et les tiges parallèles (16) du U traversent à coulissement respectivement deux perçages (8a) de la paroi correspondante (8) et portent deux ressorts hélicoïdaux de compression (15) montés précontraints entre la face interne de cette paroi et deux butées (17) solidaires respectivement des extrémités des deux tiges (16).

9. Procédé de montage d'une assise (3) de siège (1) de véhicule automobile à une structure fixe (6) liée au plancher du véhicule par l'intermédiaire de ses deux axes transversaux d'articulation (4) solidaires de l'armature de l'assise (3) et destinés à être solidarisés amoviblement respectivement à deux pièces en forme de chape (5) de la structure fixe (6) pourvues chacune d'un moyen de verrouillage (11) conformément à l'une des revendications 1 à 8, **caractérisé en ce qu'**il consiste à positionner les axes d'articulation (4), par l'intermédiaire de leurs moyens de positionnement respectifs (13), relativement aux parois latérales (7,8) des pièces en forme de chape (5), pousser vers le bas les axes d'articulation (4) pour les engager dans les découpes (12) des parois latérales (7,8) et écarter élastiquement les plaques de verrouillage (14) de leurs parois latérales associées (8) par la force de répulsion exercée par les extrémités libres des axes d'articulation (4) sur les pattes formant rampes (20) des plaques de verrouillage (14) jusqu'à ce que les axes d'articulation (4) occupent leur position aux fonds (12b) des découpes (12) à laquelle l'extrémité libre de chaque axe d'articulation (4) est automatiquement engagée dans le perçage (19) de la plaque de verrouillage associée (14).
